# EUROPÄISCHE PATENTSCHRIFT

(11) **EP 0 443 472 B1**
(45) Veröffentlichungstag und Bekanntmachung des Hinweises auf die Patenterteilung: **24.08.1994**
(21) Anmeldenummer: 91102226.7
(22) Anmeldetag: 16.02.1991
(51) Int. Cl.: F16J 15/40, F16J 15/54, F16J 15/16

(54) **Sperrflüssigkeits-Dichtungsanordnung bei einem Turboverdichter**
Confining liquid-sealing arrangement for a turbo compressor
Dispositif d'étanchéité avec liquide d'arrêt pour turbo-compresseur

(30) Priorität: 21.02.1990 DE 4005427
(43) Veröffentlichungstag der Anmeldung: 28.08.1991
(73) Patentinhaber: MANNESMANN Aktiengesellschaft, 40027 Düsseldorf (DE); Pacific Wietz GmbH + Co. KG, 44388 Dortmund (DE)
(72) Erfinder: Schellong, Helmut, W-4100 Duisburg 46 (DE); Victor, Karl-Heinz, W-4620 Castrop-Rauxel (DE); Laarmann, Hans-Wilhelm, W-4700 Hamm 3 (DE); Maser, Gustav, W-4600 Dortmund 50 (DE); Dedeken, Ralf, Dr., W-5810 Witten-Heven (DE)
(74) Vertreter: Andrejewski, Walter

(56) Entgegenhaltungen:
- GB-A- 1 360 117
- US-A- 4 071 253
- US-A- 4 087 097
- US-A- 4 109 920

## Beschreibung

Die Erfindung betrifft eine Sperrflüssigkeits-Dichtungsanordnung für die Wellenabdichtung bei einem Turboverdichter, insbesondere bei einem Hochdruck-Turboverdichter, mit den Merkmalen des Oberbegriffs des Patentanspruchs 1.

Die aus der Praxis bekannte Sperrflüssigkeits-Dichtungsanordnung, von der die Erfindung ausgeht, arbeitet mit Schwimmringdichtungen. Schwimmringdichtungen sind Radialspaltdichtungen mit Spiel zwischen der rotierenden Welle und den mit dem Dichtungsgehäuse verbundenen, aber radialbeweglichen Dichtringen. Dem Zwecke einer Sperrflüssikgeits-Dichtungsanordnung entsprechend ist der Druck des Sperrflüssigkeit größer als der abzudichtende Gasdruck. Die Druckdifferenz ist im Rahmen der bekannten Maßnahmen klein, sie liegt beispielsweise bei 0,5 bar. Sie ist klein, um die Innenleckagemenge an dem gasseitigen Dichtungsring klein zu halten. Der Radialspalt an dem äußeren Dichtungsring ist so bemessen, daß sich der zur Kühlung des gasseitigen Dichtungsringes nötige Sperrflüssigkeitsstrom als Kühlmittelstrom einstellt. Dieser Kühlmittelstrom ist etwa proportional dem Abdichtdruck. Das bedeutet, daß eine optimal Kühlung nur für einen bestimmten Druckbereich gegeben ist und daß sich für Turboverdichter, die in einem großen Druckbereich arbeiten, Einschränkungen ergeben können. Hinzu kommt, daß bei höheren Drücken die Regelung des Differenzdruckes zwischen der Sperrflüssigkeit einerseits und dem abzudichtenden Gas andererseits schwierig ist, weil der Differenzdruck im Vergleich zu dem abzudichtenden Gasdruck sehr klein wird. Die Regelung erfolgt durch eine Vordrucksteuerung und eine indirekte Differenzdruckregelung durch Regelung des Flüssigkeitsniveaus für die Sperrflüssigkeit in einem Hochbehälter. Der erzeugte Differenzdruck ist proportional der geodätischen Höhe der Sperrflüssigkeitsmenge im Hochbehälter relativ zur Welle des Turboverdichters. Die Sperrflüssigkeit wird durch Hochdruckpumpen auf Druck gebracht und im Radialspalt der äußeren Schwimmringe auf Atmosphärendruck entspannt. Die im Hochbehälter gespeicherte Sperrflüssigkeitsmenge muß so groß sein, daß bei Ausfall der Sperrflüssigkeitsversorgung ein geregeltes Abfahren der Turboverdichteranlage möglich ist. Bei Stillstand der Anlage unter Druck muß die Sperrflüssigkeitsanlage in Betrieb gehalten werden. Das Sperrflüssigkeitssystem ist insoweit ein offenes System. Im übrigen sind die beschriebenen Maßnahmen aufwendig. Eine ähnliche Anordnung ist aus der GB-A-1 360 117 bekannt.

Demgegenüber liegt der Erfindung die Aufgabe zugrunde, eine Sperrflüssigkeits-Dichtungsanordnung zu schaffen, die sehr viel einfacher aufgebaut ist, mit geringen Innenleckagemengen arbeitet und auf einfache Weise auch die Differenzdruckregelung zuläßt.

Diese Aufgabe wird gelöst mit der Sperrflüssigkeits-Dichtungsanordnung nach Patentanspruch 1. Die gasseitige Dichtung arbeitet vorzugsweise im Mischreibungsbereich. Im Rahmen der Erfindung kann mit verschiedenen Anordnungen der Gleitringe gearbeitet werden. Durch Einfachheit und Funktionssicherheit ausgezeichnet ist ein Ausführungsform, bei der der gasseitige Gleitring von einem die Welle umgebenden Faltenbalg sowie der atmosphärenseitige Gleitring durch Sekundärelemente, z.B. in Form von Federn und zumindest einem O-Ring, axial- und radialbeweglich gehalten ist. Die Anpreßkräfte des gasseitigen Gleitringes werden bestimmt durch den Faltenbalg und den wirksamen hydraulischen Differenzdruck zwischen Sperrflüssigkeit und Gas. Die Anpreßkräfte des atmosphärenseitigen Gleitringes werden bestimmt durch die Federn und den wirksamen hydraulischen Druck der Sperrflüssigkeit. Es versteht sich, daß der Faltenbalg durch andere Dichtsysteme, insbesondere durch einen O-Ring und Federelemente, ersetzt werden kann. Im Rahmen der Erfindung sind die Innenleckagemengen der Sperrflüssigkeit im allgemeinen über eine Leitung zu Abscheidern geführt.

Bei der erfindungsgemäßen Sperrflüssigkeits-Dichtungsanordnung ist die gasseitige Dichtung eine Gleitringdichtung mit niedrigen Leckagewerten, die vorzugsweise im Mischreibungsgebiet arbeitet. Die atmosphärenseitige Dichtung ist eine Axialspaltdichtung, deren Dichtflächen im dynamischen Zustand durch einen hydrodynamisch ausgebildeten Flüssigkeitsfilm getrennt sind. Mischreibung liegt vor, wenn sich im Dichtspalt zwar ein tragender Schmierfilm befindet, dieser jedoch stellenweise unterbrochen ist. Neben den Eigenschaften des Schmierstoffes beginnen auch die Gleiteigenschaften der Gleitwerkstoffpaarung das Reibverhalten bzw. die Reibungszahl zu beeinflussen. Bei der Flüssigkeitsreibung mit einem hydrodynamisch ausgebildeten Flüssigkeitsfilm wird die Reibzahl allein durch die dynamische Zähigkeit des Schmierstoffes bestimmt. Die nach außen abfließende Leckagemenge kann zur Funktionskontrolle des Gesamtsystems herangezogen werden. Sie ist stets so klein einrichtbar, daß die weiteren im System befindlichen Regeleinrichtungen niemals ihre betriebssichernden Regelbereiche überschreiten. Der Sperrflüssigkeitskreis ist geschlossen. Das bedeutet, daß die Sperrflüssigkeit bei der erfindungsgemäßen Sperrflüssigkeits-Dichtungsanordnung auf dem Abdichtdruckniveau bleibt. Sie wird durch eine Kreislaufpumpe, welche die Strömungswiderstände des geschlossenen Kreislaufs überwinden muß, umgepumpt. Die Verlustleistung der Dichtungen wird an den Kühler abgeführt. Die aus dem geschlossenen Sperrflüssigkeitskreis über die Axialspalte der Gleitringe austretende sehr kleine einstellbare Leckmenge wird intermittierend über eine kleine Speisepumpe ersetzt.

Die erreichten Vorteile sind hauptsächlich darin zu sehen, daß bei der erfindungsgemäßen Sperrflüssigkeits-Dichtungsanordnung die Leckagemenge sehr viel kleiner ist als bei der eingangs beschriebenen Ausführungsform mit Schwimmringdichtungen. Daher ist ohne Schwierigkeiten der Betrieb mit einem geschlossenen Sperrflüssigkeitskreis möglich und kann auf einfache Weise auch die Differenzdruckregelung durchgeführt werden. Das System insgesamt ist einfach, weil Hochbehälter und Sperrflüssigkeitspumpen hoher Leistung sowie die dazu üblichen Differenzdruckregelventile nicht mehr erforderlich sind. Im Ergebnis erreicht man eine beachtliche Energieersparnis. Die Kühlung der Dichtung ist unabhängig vom Druckniveau. Von besonderem Vorteil sind fernerhin die kleinen Innenleckagemenge und die Stillstandsdichtheit. Die Gleitringe und der Rotorring lassen sich ohne weiteres aus Werkstoffen hoher Standzeit aufbauen. Im allgemeinen wird mit Hart/Hart-Paarung gearbeitet und sind die Gleitringe sowie der Rotorring praktisch verschleißfrei.

Im folgenden wird die Erfindung anhand einer lediglich ein Ausführungsbeispiel darstellenden Zeichnung ausführlicher erläutert. Es zeigen
- Fig. 1: eine schematische Darstellung eines Turboverdichters mit erfindungsgemäßer Sperrflüssigkeits-Dichtungsanordnung und
- Fig. 2: in gegenüber der Fig. 1 wesentlich vergrößertem Maßstab einen Axialschnitt durch die linke der Sperrflüssigkeits-Dichtungsanordnungen des Turboverdichters in Fig. 1.

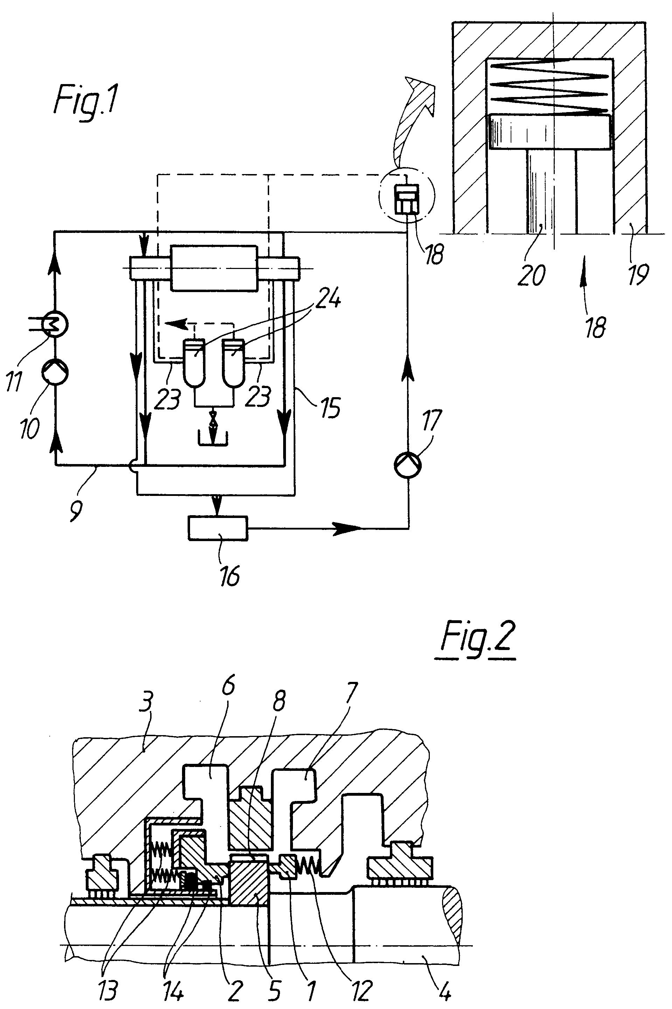

Zu der Sperrflüssigkeits-Dichtungsanordnung, die in den Figuren dargestellt ist, gehören zunächst ein gasseitiger axial dichtender Gleitring 1 und ein atmosphärenseitiger axial dichtender Gleitring 2, die beide fest im Dichtungsgehäuse 3 angeordnet sind. Es gehört dazu fernerhin ein mit der Welle 4 verbundener Rotorring 5 mit einander gegenüberliegenden Dichtflächen, denen die Gleitringe 1, 2 mit ihren Dichtflächen zugeordnet sind. Beiden Gleitringen 1, 2 ist ein Sperrflüssigkeitsraum 6 bzw. 7 zugeordnet. Die beiden Sperrflüssigkeitsräume 6, 7 stehen an der Umfangsseite des Rotorringes 5 über den Ringkanal 8 miteinander in Verbindung. Der atmosphärenseitige Gleitring 2 dichtet den zugeordneten Sperrflüssigkeitsraum 6 gegen die Atmosphäre ab. Der gasseitige Gleitring 1 dichtet den zugeordneten Sperrflüssigkeitsraum 7 gegen den Gasraum ab. Die beiden Sperrflüssigkeitsräume 6, 7 gehören einem geschlossenen Sperrflüssigkeitskreis 9 mit Pumpe 10 und Kühler 11 an. Die im Schema mit dem Bezugszeichen 10 versehene Pumpe könnte auch mit dem Rotorring 5 als Pumpenrotor arbeiten und wäre dann in die Dichtungsanordnung integriert. Aus der Fig. 2 entnimmt man, daß der gasseitige Gleitring 1 von einem die Welle 4 umgebenden Faltenbalg 12 gehalten ist. Der atmosphärenseitige Gleitring 2 ist durch Sekundärelemente in Form von Federn 13 und O-Ringen 14 axial- und radialbeweglich gehalten. Die Innenleckagemengen der Sperrflüssigkeit sind über eine Leitung 23 zu einem Abscheider 24 geführt. Nach eventueller Aufbereitung wird diese Leckmenge dem Tank 16 zugeführt. Die Außenleckagen der Sperrflüssigkeit sind über eine Leitung 15 zu dem Tank 16 geführt. Die Sperrflüssigkeitsmenge im Sperrflüssigkeitskreis wird über eine Speisepumpe 17 und einen Druckübersetzer 18 wieder aufgefüllt. Der Druckübersetzer 18 ist einerseits von dem abzudichtenden Gas und von einer nicht gezeichneten einstellbaren Feder beaufschlagt, andererseits von der Sperrflüssigkeit im Sperrflüssigkeitskreis. Über die Einstellung der Feder können der Druck im Sperrflüssigkeitskreis und damit die Druckdifferenz zwischen Sperrflüssigkeit und abzudichtendem Gas bestimmt werden. Der Druckübersetzer 18 ist gleichzeitig als Sperrflüssigkeitsspeicher ausgebildet.

Die Druckdifferenz zwischen dem abzudichtenden Gas und der Sperrflüssigkeit wird in dem Druckübersetzer 18 erzeugt. Der Druckübersetzer 18 besteht im einzelnen aus einem Druckzylinder 19, in dem ein Kolben 20 axialbeweglich angeordnet ist. Die eine Seite des Kolbens 20 wird mit der Sperrflüssigkeit und die andere Seite wird mit dem abzudichtenden Gas beaufschlagt. Auf der Gasseite greift zusätzlich zum Gasdruck noch eine Federkraft an. Diese erzeugt eine Druckdifferenz zwischen Sperrflüssigkeit und Gas. Der Differenzdruck wird in einem vorgegebenen Bereich gehalten und ist unabhängig vom Druckniveau. Da der Druckübersetzer 18 gleichzeitig Sperrflüssigkeitsspeicher ist, sind auch bei Ausfall der Energieversorgung der Speisepumpen ein geregeltes Abfahren des Turboverdichters und ein längerer Stillstand unter Druck möglich.

## Patentansprüche

1. Sperrflüssigkeits-Dichtungsanordnung für die Wellenabdichtung bei einem Turboverdichter, insbesondere bei einem Hochdruck-Turboverdichter, mit einem gasseitigen axial dichtenden Gleitring (1), einem atmosphärenseitigen axial dichtenden Gleitring (2), die beide im Gehäuse (3) fest angeordnet sind, und einem mit der Welle (4) verbundenen Rotorring (5) mit einander gegenüberliegenden Dichtflächen, denen die Gleitringe (1, 2) mit ihren Dichtflächen zugeordnet sind, wobei beiden Gleitringen (1, 2) ein Sperrflüssigkeitsraum (6 bzw. 7) zugeordnet ist, welche Sperrflüssigkeitsräume (6, 7) an der Umfangsseite des Rotorringes (5) miteinander über einen Ringkanal (8) in Verbindung stehen, wobei des atmosphärenseitige Gleitring (2) des zugeordneten Sperrflüssigkeitsraum (6) gegen die Atmosphäre abdichtet sowie der gasseitige Gleitring (1) den zugeordneten Sperrflüssigkeitsraum (7) gegen des Gasraum abdichtet, **dadurch gekennzeichnet,** daß die beiden Sperrflüssigkeitsräume (6, 7) einem geschlossenen Sperrflüssigkeitskreis (9) mit Pumpe (10) und Kühler (11) angehören und die Sperrflüssigkeitsmenge im Sperrflüssigkeitskreis (9) über eine Speisepumpe (17) und einen Druckübersetzer (18) wieder auffüllbar ist, wobei der Druckübersetzer (18) einerseits von dem abzudichtenden Gas und durch eine einstellbare Federkraft sowie andererseits von der Sperrflüssigkeit im Sperrflüssigkeitskreis beaufschlagt ist, daß der Druckübersetzer (18) eine Druckdifferenz zwischen Sperrflüssigkeit und Gas unabhängig vom Druckniveau einstellt und den Druck im Sperrflüssigkeitskreis (9) bestimmt, und daß der Druckübersetzer (18) gleichzeitig als Sperrflüssigkeitsspreicher ausgebildet ist.

2. Sperrflüssigkeits-Dichtungsanordnung nach Anspruch 1, wobei der gasseitige Gleitring (1) von einem die Welle (4) umgebenden Faltenbalg (12) sowie der atmosphärenseitige Gleitring (2) durch Sekundärelemente (13, 14) axial- und radialbeweglich gehalten ist.

3. Sperrflüssigkeits-Dichtungsanordnung nach einem der Ansprüche 1 oder 2, dadurch gekennzeichnet, daß die Innenleckagemengen der Sperrflüssigkeit über eine Leitung (23) zu Abscheidern (24) geführt sind.

## Claims

1. A sealing liquid seal arrangement for the shaft seal in a turbocompressor, particularly in a high-pressure turbocompressor, with a sliding ring (1) providing an axial seal on the gas side and a sliding ring (2) providing an axial seal on the atmosphere side, which are both disposed fixed in the housing (3), and a rotor ring (5) attached to the shaft (4) and having opposite seal faces with which the seal faces of the sliding rings (1, 2) are associated, wherein a sealing liquid space (6; 7) is associated with both sliding rings (1, 2), which sealing liquid spaces (6, 7) are connected to each other at the peripheral face of the rotor ring (5) via an annular channel (8), wherein the sliding ring (2) on the atmosphere side seals the associated sealing liquid space (6) from the atmosphere and the sliding ring (1) on the gas side seals the associated sealing liquid space (7) from the gas space, characterised in that the two sealing liquid spaces (6, 7) form part of a closed sealing liquid circuit (9) with a pump (10) and a cooling device (11) and the amount of sealing liquid in the sealing liquid circuit (9) can be topped up again via a supply pump (17) and a pressure intensifier (18), wherein the pressure intensifier (18) is acted upon on one side by the gas to be sealed and by an adjustable spring force and is acted upon on the other side by the sealing liquid in the sealing liquid circuit, that the pressure intensifier (18) sets a pressure difference between the sealing liquid and the gas irrespective of the pressure level and determines the pressure in the sealing liquid circuit (9), and that the pressure intensifier (18) is at the same time constructed as a sealing liquid store.

2. A sealing liquid seal arrangement according to claim 1, wherein the sliding ring (1) on the gas side is held by an expanding bellows (12) surrounding the shaft (4) and the sliding ring (2) on the atmosphere side is held by secondary elements (13, 14) so that it is axially and radially movable.

3. A sealing liquid seal arrangement according to either one of claims 1 or 2, characterised in that the amounts of internal leakage of the sealing liquid are conveyed to separators (24) via a line (23).

## Revendications

1. Garniture d'étanchéité à joint liquide, pour réaliser l'étanchéité de l'arbre d'un turbo-compresseur, en particulier un turbo-compresseur à haute pression, comportant un segment glissant (1) assurant l'étanchéité axiale côté gaz, un segment glissant (2) assurant l'étanchéité axiale côté atmosphère, tous deux montés de manière fixe dans le corps (3), et un segment rotor (5) relié à l'arbre (4) présentant des faces de jointage mutuellement en vis-à-vis, auxquelles sont associés les deux segments glissants (1, 2) par leurs faces de jointage, tandis qu'à chacun des segments glissants (1, 2) est associée une chambre pour le joint liquide (6, 7) lesquelles chambres (6, 7) étant reliées l'une à l'autre, sur le côté périphérique du segment rotor (5) à travers un canal de forme annulaire (8), le segment glissant (2) du côté atmosphère réalisant l'étanchéité entre la chambre contenant le joint liquide (6) et l'atmosphère et le segment glissant côté gaz (1) assurant l'étanchéité entre la chambre contenant le joint liquide (7) et la chambre contenant le gaz, caractérisée en ce que les deux chambres (6, 7) contenant le liquide de joint font partie d'un circuit fermé (9) dans lequel circule le liquide de jointage comportant une pompe (10) et un réfrigérant (11) et que la quantité de liquide de joint contenu dans le circuit (9) peut être complétée par une pompe d'alimentation (17) et un surpresseur (18), ledit surpresseur (18) étant commandé, d'une part, par le gaz à étanchéiser et par une force élastique réglable et, d'autre part, par le liquide de jointage se trouvant dans le circuit, par le fait que le surpresseur (18) met en place une pression différentielle entre le liquide de jointage et le gaz indépendamment du niveau de pression et détermine la pression qui règne dans le circuit (9), et en ce que ledit surpresseur (18) est réalisé en même temps sous la forme d'un réservoir à liquide de jointage.

2. Garniture d'étanchéité à joint liquide selon la revendication 1, où le segment glissant côté gaz (1) est maintenu en situation mobile axialement et radialement par un soufflet (12) entourant l'arbre (4) et, le segment glissant (2) côté atmosphère est maintenu en situation mobile axialement et radialement des éléments secondaires (13, 14).

3. Garniture d'étanchéité à joint liquide selon la revendication 1 ou 2, caractérisée en ce que les fuites intérieures du liquide de joint sont conduites vers des séparateurs (24) à travers une conduite (23).
